# EUROPÄISCHE PATENTANMELDUNG

(11) **EP 4 309 874 A2**
(43) Veröffentlichungstag der Anmeldung: **24.01.2024**
(21) Anmeldenummer: 23191883.0
(22) Anmeldetag: 17.08.2023
(51) Int. Cl.: B29C 49/48, B29C 49/62, B29C 49/06, B29C 49/46, B29L 31/00

(54) **ASEPTISCHE BLASFORM MIT RÜCKSEITIGEN ABGASKANÄLEN UND VERFAHREN ZUM FORMEN VON BEHÄLTNISSEN UNTER ASEPTISCHEN BEDINGUNGEN**

(30) Priorität: 24.08.2022 DE 102022121447
(71) Anmelder: Krones AG, 93073 Neutraubling (DE)
(72) Erfinder: Geltinger, Florian, 93073 Neutraubling (DE); Soellner, Juergen, 93073 Neutraubling (DE)
(74) Vertreter: Bittner, Bernhard

(57) **Zusammenfassung**

Die vorliegende Erfindung betrifft eine Blasform (1) zum Umformen von Kunststoffvorformlingen (60) zu Kunststoffbehältnissen mit einem ersten Seitenteil (2) und einem zweiten Seitenteil (3), welche bezüglich einander relativbeweglich sind und in einem zusammengesetzten Zustand einen Hohlraum (110) zumindest abschnittsweise umschließen, innerhalb dessen ein Kunststoffvorformling (60) zu einem Kunststoffbehältnis expandierbar ist, wobei das erste und/oder zweite Seitenteil (2, 3) mindestens einen zum Durchleiten eines Fluids geeigneten und vorgesehenen ersten Kanal (4), welcher sich von einer den Hohlraum (110) definierenden inneren Oberfläche (I2, I3) zu einer gegenüberliegenden außenseitigen Oberfläche (A2, A3) erstreckt, und einen zweiten Kanal (5) aufweist, welcher mit dem ersten Kanal (4) in Fluidverbindung steht und sich zumindest abschnittweise entlang der außenseitigen Oberfläche (A2, A3) des ersten und/oder zweiten Seitenteils (2, 3) erstreckt, wobei der erste Kanal (4) und/oder der zweite Kanal (5) in einem Zustand der Blasform, in dem eine Umformung eines Kunststoffvorformlings (60) zu einem Kunststoffbehältnis innerhalb der Blasform (1) möglich ist, zumindest einseitig in Fluidverbindung mit einem Reinraum (100) ist. Weiterhin betrifft die Erfindung ein Verfahren zum Umformen eines Kunststoffvorformlings zu einem Behältnis in einer solchen Blasform.

## Beschreibung

Die vorliegende Erfindung bezieht sich auf eine Blasform zum Umformen von Kunststoffvorformlingen zu Kunststoffbehältnissen mit einem ersten Seitenteil und einem zweiten Seitenteil, welche bezüglich einander relativbeweglich sind und in einem zusammengesetzten Zustand einen Hohlraum zumindest abschnittsweise umschließen, innerhalb dessen ein Kunststoffvorformling zu einem Kunststoffbehältnis expandierbar ist. Weiterhin betrifft die Erfindung ein Verfahren zum Umformen von Kunststoffvorformlingen zu Kunststoffbehältnissen innerhalb eines Reinraums. Mindestens zweiteilige Blasformen zum Umformen von Kunststoffvorformlingen zu Kunststoffbehältnissen deren Teile gegenüber einander relativbeweglich sind, sind aus dem Stand der Technik bekannt.

Im geschlossenen Zustand ergibt sich bei derartigen Blasformen die Problematik, dass ein Gas zwischen der Blasforminnenseite und dem in der Blasform zu expandierenden Vorformling angeordnet ist. Das Expandieren des Vorformlings muss gegen den Druck erfolgen, den dieses Gas auf die Außenwandungen des Vorformlings ausübt. Im einfachsten Fall kann das Gas durch Öffnungen in der Blasform zu einer Außenseite der Blasform abgeleitet werden. Dies ist jedoch nicht immer ohne weiteres möglich. Beispielsweise sind Blasformen bekannt, bei denen das Schließen der Blasform und dauerhafte Fixieren der aufeinander zugestellten Blasformteile durch Druckkissen realisiert ist, die die Blasformteile von außen druckbeaufschlagen und einen Gegendruck für den Blasdruck bieten. Dadurch kann verhindert werden, dass gegen Ende jedes Blasformvorgangs, wenn der Blasdruck besonders hoch sein muss, die Blasformteile durch den von innen wirkenden Blasdruck gegenüber einander verschoben werden und dementsprechend die geformten Behältnisse nicht die gewünschte Form aufweisen oder sogar defekt sind. Die die Außenseite flächig abschließenden Druckkissen erschweren jedoch das Ableiten des überschüssigen Gases aus dem Blasforminneren.

Auch bei Umformungsprozessen von Vorformlingen zu Behältnissen unter aseptischen Bedingungen ist das Ableiten des Gases aus dem Blasforminneren problematisch, da die dazu notwendigen Leitungen gegenüber dem Blasforminneren zumindest temporär offen sind und daher auch keimfrei sein müssen. Die Gewährleistung der Keimfreiheit von Gasableitungen ist besonders dann schwierig, wenn lange Leitungen notwendig sind, beispielsweise um das Gas um ein Druckkissen herum zu leiten

Demzufolge besteht die Problematik, eine Blasform bereitzustellen, welche die Ableitung des zwischen der Blasforminnenseite und einem Vorformling vorhandenen Gases unter sterilen Bedingungen ermöglicht. Dabei sollten die notwendigen Leitungen leicht zugänglich und leicht zu sterilisieren sein.

Diese Aufgabe wird vorrichtungsseitig gemäß den Merkmalen des Patentanspruches 1 gelöst. Verfahrensseitig wird diese Aufgabe durch die Merkmale des Patentanspruchs 10 gelöst. Weitere vorteilhafte Ausführungsformen und Verfahrensvarianten sind Gegenstand der abhängigen Ansprüche.

Ein wesentlicher Aspekt der Erfindung liegt somit in einer Blasform zum Umformen von Kunststoffvorformlingen zu Kunststoffbehältnissen mit einem ersten Seitenteil und einem zweiten Seitenteil, welche bezüglich einander relativbeweglich sind und in einem zusammengesetzten Zustand einen Hohlraum zumindest abschnittsweise umschließen, innerhalb dessen ein Kunststoffvorformling zu einem Kunststoffbehältnis expandierbar ist. Erfindungsgemäß weist das erste und/oder zweite Seitenteil mindestens einen zum Durchleiten eines Fluids geeigneten und vorgesehenen ersten Kanal auf, welcher sich von einer den Hohlraum definierenden inneren Oberfläche zu einer gegenüberliegenden außenseitigen Oberfläche erstreckt. Weiterhin weist es einen zweiten Kanal auf, welcher mit dem ersten Kanal in Fuidverbindung steht und sich zumindest abschnittweise entlang der außenseitigen Oberfläche des ersten und/oder zweiten Seitenteils erstreckt, wobei der erste Kanal und/oder der zweite Kanal in einem Zustand der Blasform, in dem eine Umformung eines Kunststoffvorformlings zu einem Kunststoffbehältnis innerhalb der Blasform möglich ist, zumindest einseitig in Fluidverbindung mit einem Reinraum ist. Vorzugsweise ist der erste Kanal und/oder der zweite Kanal in diesem Zustand beidseitig in Fluidverbindung mit einem Reinraum.

Diese Ausgestaltung der Kanäle ermöglicht es, das Fluid, vorzugsweise ein Gas, durch den ersten Kanal aus dem Volumen zwischen dem Kunststoffvorformling und der inneren Oberfläche der geschlossenen Blasform auf eine Außenseite der Blasform beziehungsweise eines Seitenteils abzuleiten. Ein solcher erster Kanal kann sehr kurz sein, da er sich lediglich durch eine Wandung des Seitenteils erstrecken muss. Üblicherweise weist eine solche Wandung eine Stärke auf, die deutlich unter 50 mm liegt, meist im Bereich von etwa 10 - 25 mm. Eine solche Strecke ist beispielsweise durch des einsprühen eines Sterilisationsmittels leicht zu entkeimen beziehungsweise keimfrei zu halten.

Dementsprechend ist bevorzugt, dass der erste Kanal eine Durchdringung, vorzugsweise eine Bohrung, durch eine den Hohlraum zumindest abschnittsweise umschließende Wandung des ersten und/oder zweiten Seitenteils ist.

Um auch eine einfache Möglichkeit zu bieten, den zweiten Kanal einfach mit einem Sterilisationsmittel zu beaufschlagen ist bevorzugt, dass der zweite Kanal ein offener Kanal ist, welcher vorzugsweise als eine Vertiefung in einer außenseitigen Oberfläche des ersten und/oder zweiten Seitenteils ausgebildet ist. Als offener Kanal soll somit in diesem Zusammenhang nicht verstanden werden, dass der Kanal an seinen längsseitigen Enden offen ist, sondern dass eine Seite und/oder Seitenwandung zumindest abschnittsweise offen ist. Vorzugsweise ist der Kanal somit als eine Vertiefung, beispielsweise eine Furche, in einer außenseitigen Oberfläche des ersten und/oder zweiten Seitenteils ausgebildet. Wenn ein solches Seitenteil in einen Blasformträger eingesetzt ist, kann der Blasformträger vorzugsweise als Seitenwandung des zweiten Kanals wirken und diese seitlich abschließen.

Da flexible Materialien wie beispielsweise ein Druckkissen je nach Flexibilität teilweise in den (seitlich offenen) zweiten Kanal eingepresst werden könnten, ist bevorzugt, dass das Seitenteil vorzugsweise im geschlossenen Zustand nicht mittels eines (flexiblen) Druckkissens in der gewünschten Position gehalten wird. Bevorzugt ist somit die Blasform druckkissenfrei ausgebildet. Dies bedeutet, dass auf das Anbringen eines Druckkissens, beispielsweise zwischen einem Blasformträger (-teil) und einem Seitenteil verzichtet wird. Vielmehr erfolgt die lagestabile Sicherung der beiden Seitenteile gegenüber einander, welche üblicherweise durch das Druckkissen gewährleistet ist, durch einen Verriegelungsmechanismus, wie er weiter unten beschrieben ist. Bevorzugt bewirkt bei der Verriegelung mittels eines solchen Verriegelungsmechanismus die Verriegelungsbewegung der Seitenteile auch ein weiteres Zustellen der Seitenteile aufeinander zu und das Sichern der Seitenteile in dieser Lage gegenüber einander während des Blasformungsprozesses.

In einer bevorzugten Ausführungsform weist das erste und/oder zweite Seitenteil mehrere erste Kanäle und/oder zweite Kanäle auf. Dadurch kann ein schnellerer und gleichmäßigerer Abfluss des Fluids aus dem inneren Volumen der geschlossenen Blasform ermöglicht werden. Insbesondere ist bevorzugt, dass mehrere erste Kanäle in Fluidverbindung mit einem zweiten Kanal sind. Beispielsweise könnte ein zweiter Kanal abschnittsweise entlang einer äußeren Oberfläche eines Seitenteils verlaufen und an mehreren Stellen mit ersten Kanälen verbunden sein, die beispielsweise als Bohrungen durch das Seitenteil hindurch ausgestaltet sind.

Vorzugsweise erstreckt sich der mindestens eine zweite Kanal entlang einer Umfangsrichtung eines Seitenteils und/oder der (geschlossenen) Blasform. Insbesondere ist bevorzugt, dass sich mehrere zweite Kanäle entlang einer Umfangsrichtung eines Seitenteils und/oder der (geschlossenen) Blasform erstrecken. Diese zweiten Kanäle könnten im Wesentlichen parallel zueinander verlaufen. In Kombination mit den oben erwähnten mehreren ersten Kanälen, die in einen, bevorzugt jeden zweiten Kanal münden, kann so ein ausreichend großer Volumenstrom aus der geschlossenen Blasform hinaus gewährleistet werden. Gleichzeitig kann der Volumenstrom durch die vielen ersten Kanäle, die an verschiedenen Positionen im Inneren der geschlossenen Blasform münden, gewährleitet werden, dass ein homogener Abfluss des Fluids durch die Seitenteile hindurch möglich ist. Die kann unerwünschte, ungleichmäßige Verformungen des Vorformlings während des Umformungsvorgangs, die aufgrund lokaler Druckschwankungen im Inneren der Blasform auftreten, vermeiden.

In einer bevorzugten Ausführungsform weist das erste und/oder zweite Seitenteil mehrere erste Kanäle und/oder zweite Kanäle auf. Wie oben beschrieben ist, kann dadurch ein homogenes Abströmen des Fluids aus dem Volumen zwischen Blasforminnenseite und der Außenseite des Vorformlings während dessen Expansion zu einem Behältnis innerhalb der geschlossenen Blasform ermöglicht werden. Um das Abströmen des Fluids besonders hobogen zu ermöglichen, ist bevorzugt, dass jeder dieser Kanäle von dem nächstliegenden Kanal höchstens 100 mm, bevorzugt ≤ 90 mm, weiter bevorzugt ≤ 80 mm und insbesondere bevorzugt ≤ 75 mm beabstandet ist.

Vorzugsweise weist die Blasform, welche allgemein auch als Umformungsstation bezeichnet werden kann, weiterhin einen Bodenteilträger zum Tragen eines Bodenteils der Blasform auf. Diese Seitenteile sowie das Bodenteil der Blasform bilden gemeinsam einen Hohlraum aus, innerhalb dessen die Kunststoffvorformlinge durch Beaufschlagung mit einem fließfähigen Medium und insbesondere mit Druckluft zu den Kunststoffbehältnissen umformbar sind.

Die Seitenteile sind vorzugsweise bezüglich einer vorgegebenen Schwenkachse gegenüber einander schwenkbar. Dadurch ist es möglich, dass die Seitenteile buchartig aufgeklappt werden können und durch die beim Aufklappen entstehende Öffnung ein Vorformling in den Hohlraum eingeführt werden kann.

In einer bevorzugten Ausführungsform weist die Blasform einen Verriegelungsmechanismus auf, um in einem geschlossenen Zustand der Blasform die beiden Seitenteile gegenüber einander (auf der der Schwenkachse abgewandten Seite) zu fixieren. Vorzugsweise werden dazu nicht die Seitenteile selbst gegenüber einander verriegelt, sondern Seitenteilträger, wobei jeder Seitenteilträger bevorzugt ein Seitenteil trägt. Vorzugsweise weist ein solcher Verriegelungsmechanismus ein erstes Verriegelungselement auf, welches bezüglich einer vorgegebenen Schwenkachse schwenkbar ist und welches zum Verriegeln der Seitenteilträger mit einem zweiten Verriegelungselement ineinandergreift.

Vorzugsweise ist das erste Verriegelungselement bezüglich der vorgegebenen Schwenkachse exzentrisch schwenkbar. Die Schwenkbewegung bewirkt dadurch auch eine Longitudinalverschiebung des Verriegelungselements, was vorzugsweise dazu führt das nach dem Eingreifen des ersten Verriegelungselements in das zweite Verriegelungselement das erste Verriegelungselement bezüglich der Schwenkachse zurückgezogen wird und somit auch das zweite Verriegelungselement in Richtung de Schwenkachse druckbeaufschlagt wird. Dadurch kann gegebenenfalls auch ohne Druckkissen eine sichere und dem Innen- beziehungsweise Blasdruck entgegenwirkende Sicherung der beiden Seitenteile gegenüber einander sichergestellt werden.

In einer bevorzugten Ausführungsform weist wenigstens der erste oder zweite Seitenteil, bevorzugt der erste und zweite Seitenteil jeweils, einen Befestigungsabschnitt auf, an dem ein Adapterelement lösbar anbringbar ist. Eine solche ausführungsform macht eine Blasform beziehungsweise das oder die Seitenteile besonders flexibel einsetzbar, da es je nach Ausgestaltung des lösbaren Adapterelements an bestimmte Anforderungen angepasst werden kann. Vorzugsweise kann das Seitenteil auch ohne ein im Befestigungsabschnitt angeordnetes Adapterelement seine Funktion als Begrenzung eines Raums zur Expansion eines Vorformlings zu einem Behältnis während eines Blasformvorgangs erfüllen.

Vorzugsweise ermöglicht ein solches Adapterelement ein vollautomatisches und/oder halbautomatisches Wechseln mindestens eines Seitenteils. So kann das Adapterelement in einer bevorzugten Ausführungsform pneumatisch gegenüber einem Blasformträger festlegbar und/oder lösbar sein. Diese Ausgestaltung ermöglicht, dass bei einem Wechsel einer Blasform die Blasform, beziehungsweise die Blasformteile, wie beispielsweise die Seitenteile nicht händisch von dem Blasformträger gelöst werden müssen. Ebenso müssen die Teile einer Blasform mit einer anderen Behältnisgeometrie nicht händisch in dem Blasformträger fixiert werden. Vielmehr ist es möglich, dass die Verriegelung (und die Freigabe beziehungsweise Entriegelung) automatisch erfolgt, beispielsweise durch eine pneumatische Verschiebung eines Riegels.

In einer weiteren ergänzenden oder alternativen Ausführungsform ist das Adapterelement zum Lösen und/oder Festlegen des Seitenteils gegenüber einem Blasformträger von einer Robotereinrichtung greifbar. In dieser Ausführungsform kann nicht nur das Festlegung und Lösen des Seitenteils gegenüber einem Blasformträger werkzeuglos und ohne direktes Eingreifen eines Benutzers erfolgen, sondern auch das Einführen und Entnehmen des Seitenteils in den und aus dem Blasformträger.

Bevorzugt weist das erste und/oder zweite Seitenteil mindestens ein Befestigungsmittel und/oder Adapterelement zur Verbindung des Seitenteils mit einem Blasformträger auf, wobei dieses Befestigungsmittel und/oder Adapterelement vorzugsweise mittels eines Dichtelements gegenüber mindestens einem der ersten und/oder zweiten Kanäle, vorzugsweise gegenüber allen ersten und/oder zweiten Kanälen abgedichtet ist. Ein solches Dichtelements zwischen dem Befestigungsmittel und mindestens einem der ersten und/oder zweiten Kanäle kann dafür sorgen, dass - insbesondere bei einem pneumatisch lösbaren Befestigungsmittel - das Befestigungsmittel ungewollt durch aus einem der Kanäle austretendes Fluid ausgelöst wird. Außerdem kann gewährleistet werden, dass auch wenn das Befestigungsmittel nicht innerhalb des Reinraums liegt, keine Verunreinigungen von dem Befestigungsmittel in die Kanäle und somit in den Reinraum gelangen können.

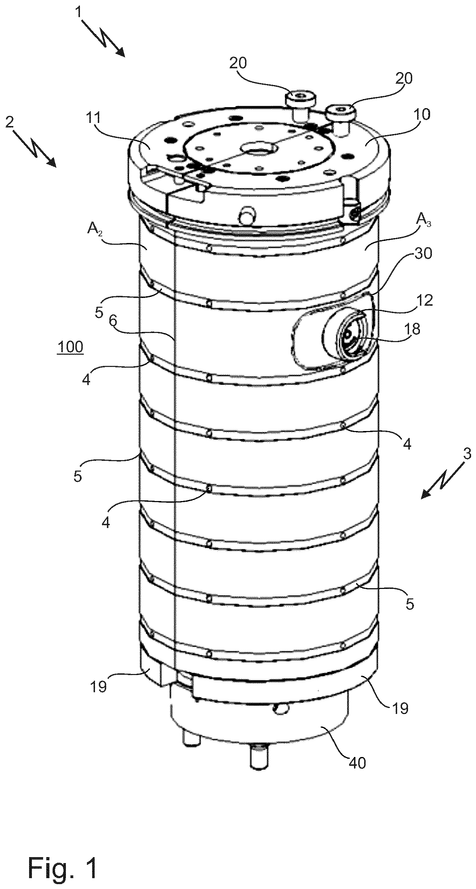

In einer bevorzugten Ausführungsform ist das Befestigungsmittel und/oder Adapterelement für einen automatisierten Blasformwechsel, vorzugsweise einen von einem Blasformwechselroboter durchführbaren Blasformwechsel, gegenüber dem Blasformträger lösbar und/oder arretierbar. Dies kann wie oben beschrieben beispielsweise über entsprechende Kontaktelemente einer Adaptereinrichtung realisiert sein, die von einer Greifeinrichtung eines Roboters erfasst werden können. Ergänzend oder alternativ zu dieser Ausführungsform ist es auch möglich, dass einsprechende Kontaktelemente direkt auf einem Blasformteil beziehungsweise Seitenteil vorgesehen sind. Bei dieser Ausführungsform kann der Roboter das Blasformteil auch dann mittels einer Greifeinrichtung greifen, wenn kein Adapterelement vorgesehen ist. Vorzugsweise weist ein Kontaktelement eine Geometrie auf, die ein sicheres Greifen durch den Roboter ermöglicht. Dabei kann es sich beispielsweise wie im Zusammenhang mit Fig. 1 dargestellt um einen oder mehrere etwa pilzförmigen Vorsprung handeln. Auch andere Geometrien können für bestimmte Anwendungen oder Roboter vorteilhaft sein, wobei formschlüssig ineinandergreifende Geometrien der Greifeinrichtung des Roboters und der Blasform bevorzugt sind. Vorzugsweise sind diese ausgewählt aus einer Gruppe die Rastelemente, Vorsprünge, Sägezahnstrukturen, Winkelelemente und Kombinationen davon umfasst. Denkbar sind jedoch auch andere Geometrien und/oder Wirkverbindungen wie beispielsweise eine ebene Fläche die für einen Saugnapf beziehungsweise Vakuumheber des Roboters als komplementäre Kontaktfläche dienen kann.

Vorzugsweise weist das erste und/oder zweite Seitenteil mindestens ein maschinenlesbares Datenspeicherelement auf. Dadurch wird ermöglicht, dass ein Roboter das zu greifende Seitenteil oder zumindest die Art des zu greifenden Seitenteils eindeutig identifizieren kann. Dadurch kann vermieden werden, dass eine Blasform welche eine nicht zu der Geometrie des zu behandelnden Vorformlings und/oder des zu produzierenden Behältnisses passt, in den Blasformträger eingesetzt wird. Selbst wenn eine solche ungeeignete Blasform eingesetzt worden wäre, könnte sie aufgrund des Datenspeicherelements schnell und vorzugsweise kontaktlos eindeutig identifiziert werden.

Vorzugsweise ist das Datenspeicherelement ausgewählt ist aus einer Gruppe, die einen nichtflüchtigen Speicher, eine RFID-Markierung, einen optischen 2D-Code, vorzugsweise einen QR-Code, DataMatrix-Code Han-Xin-Code, JAB-Code, Maxi-Code, DotCode oder Aztec-Code, optischen eindimensionalen Code, vorzugsweise einen Barcode, EAN-X, UPC-X oder 2/5 Interleaved, und einen dreidimensionalen Code, vorzugsweise Vorsprünge und/oder Vertiefungen in einem Identifikationsbereich des ersten und/oder zweiten Seitenteils umfasst. Wie oben erläutert kann durch einen solchen Code der Roboter oder eine andere Überprüfungseinrichtung eindeutig erkennen, ob eine geeignete Blasform in einem Blasformträger angeordnet ist. Bezüglich der oben erwähnten Kodierung durch einen dreidimensionalen Code der Vorsprünge und/oder Vertiefungen umfasst, kann es vorteilhaft sein, dass dieser Code gleichzeitig eine Kontaktstelle des Blasformteils bildet, welche von einem Greifelement des Roboters kontaktiert wird. Ist die dreidimensionale Struktur des Kontaktelements nicht kompatibel zu einem Greifelement des Roboters kann dieses nicht vom Roboter gegriffen werden und somit das Blasformteil als ungeeignet identifiziert werden.

Vorzugsweise ist das Befestigungsmittel in einem Zustand der Blasform, in dem eine Umformung eines Kunststoffvorformlings zu einem Kunststoffbehältnis innerhalb der Blasform möglich ist, in Fluidverbindung mit einem Reinraum. In dieser Ausgestaltung kann das Befestigungsmittel von dem im Reinraum angeordneten Fluid umgeben sein. Daher ist bevorzugt, dass das Befestigungsmittel sterilisierbar ist, insbesondere also für eine mehrmalige thermische und/oder chemische Behandlung (beispielsweise mit einer H₂O₂-Lösung und/oder Temperaturbeaufschlagung) ausgelegt ist. In dieser Ausführungsform könnte auch der Roboter zum Wechseln zwischen verschiedenen Blasformen, die in einem Blasformträger eingesetzt sind, innerhalb des Reinraums angeordnet sein und mehrere Garnituren verschiedener Blasformen innerhalb des Reinraums vorhalten, so dass der Garniturenwechsel ohne das Öffnen des Reinraums erfolgen kann.

Bei einer weiteren bevorzugten Ausführungsform ist die Blasform unmittelbar an dem Blasformträger befestigbar. Bei dieser Ausführungsform wird daher vorgeschlagen, dass die Blasform und insbesondere das oder die Seitenteile der Blasform unmittelbar und insbesondere ohne einem zwischen dem Blasformträger und dem Seitenteil befindlichen Druckkissen an dem Blasformträger befestigt sind und/oder befestigt werden.

Weiterhin betrifft die vorliegende Erfindung ein Verfahren zum Umformen von Kunststoffvorformlingen zu Kunststoffbehältnissen innerhalb eines Reinraums. Dieses Verfahren zeichnet sich durch die folgenden Schritte aus:
- Einführen eines Vorformlings in eine Blasform mit einem ersten Seitenteil und einem zweiten Seitenteil, welche bezüglich einander relativbeweglich sind,
- aufeinander Zuführen des ersten Seitenteils und des zweiten Seitenteils bis zu einem zusammengesetzten Zustand in welchem ein Hohlraum den Kunststoffvorformling umschließt,
- Einleiten eines Mediums in ein inneres Volumen des Kunststoffvorformlings und expandieren des Kunststoffvorformlings zu einem Kunststoffbehältnis, wobei ein im Hohlraum zwischen einer Außenwandung des Kunststoffvorformlings und einer Innenwandung des ersten und/oder zweiten Seitenteils angeordnetes Fluid durch einen ersten Kanal, welcher sich von einer den Hohlraum definierenden inneren Oberfläche des ersten und/oder zweiten Seitenteils zu einer gegenüberliegenden außenseitigen Oberfläche des ersten und/oder zweiten Seitenteils erstreckt ausströmt und über einen zweiten Kanal, welcher mit dem ersten Kanal in Fuidverbindung steht und sich zumindest abschnittweise entlang der außenseitigen Oberfläche des ersten und/oder zweiten Seitenteils erstreckt, in den Reinraum abgeleitet wird.

Dieses Verfahren erlaubt einen besonders einfachen Abstrom des Fluids aus dem Volumen zwischen der Blasforminnenwandung und der Außenwandung des Vorformlings während dessen Umformung in der geschlossenen Blasform.

Eine Desinfektion und/oder Sterilisation der Kanäle kann besonders einfach durchgeführt werden. Insbesondere das Innere des zweiten Kanals ist leicht für ein Sterilisationsmedium zugänglich, wenn der Kanal als offener Kanal wie beispielsweise einer Vertiefung oder Furche in der außenseitigen Oberfläche des ersten und/oder zweiten Seitenteils ausgeführt ist. Wird das Seitenteil von einem Blasformträger gelöst, liegt das Innere des zweiten Kanals zumindest abschnittsweise frei und kann vorzugsweise über die gesamte Kanallänge mit dem Sterilisationsmedium beaufschlag werden.

Eine Sterilisation des ersten Kanals ist meist leichter zu realisieren, da dessen Länge oft geringer ist und lediglich der Stärke des Seitenteils (entlang der radialen Richtung des im Inneren der Blasform umzuformenden Vorformlings) entspricht. Vorzugsweise erstreckt sich der erste Kanal entlang der radialen Richtung des im Inneren der Blasform umzuformenden Vorformlings.

Das Verfahren ist insbesondere dazu vorgesehen, eine wie oben beschriebene Blasform zu verwenden und insbesondere einen Vorformling in einer solchen Blasform zu einem Behältnis umzuformen und/oder eine solche Blasform in einem Blasformträger anzuordnen. Verfahrensschritte, die das Bereitstellen oder Ausbilden der oben vorrichtungsseitg beschriebenen Merkmale zum Gegenstand haben, sollen daher von der Offenbarung mit umfasst sein.

Analog weist die Blasform vorzugsweise alle notwendigen Komponenten auf, um das oben beschriebene Verfahren durchzuführen und ist insbesondere dazu eingerichtet, einzelne oder mehrere im Kontext des obigen Verfahrens beschriebene Verfahrensschritte einzeln oder in Kombination miteinander durchzuführen.

Weitere Vorteile und Ausführungsformen ergeben sich aus den beigefügten Zeichnungen.

Darin zeigen:
- Fig. 1: eine schematische Darstellung einer Blasform in einem geschlossenen Zustand;
- Fig. 2a: eine weitere schematische Darstellung einer Blasform in einem geschlossenen Zustand;
- Fig. 2b: eine schematische Darstellung von Adapterelementen zum Ansetzen an eine Blasform;
- Fig. 3a: zeigt eine Schnittdarstellung einer Blasform 1 im geschlossenen Zustand;
- Fig. 3b: zeigt eine Schnittdarstellung einer Blasform 1 in der zusätzlich auch ein Vorformling dargestellt ist.

Fig. 1 zeigt eine schematische Darstellung einer Blasform 1 in einem geschlossenen Zustand. In einem von der Blasform 1 umschlossenen Hohlraum (nicht gezeigt) lassen sich Kunststoffvorformlinge zu Kunststoffbehältnissen expandieren. Die Blasform 1 umfasst ein erstes Seitenteil 2 und einen zweiten Seitenteil 3, welche bezüglich einander relativbeweglich sind um die Blasform zu öffnen oder zu schließen. Im gezeigten Beispiel ist die Blasform 1 geschlossen und die beiden Seitenteile 2, 3 stoßen an der Kontaktstelle 6 aneinander. Im geöffneten Zustand kontaktieren sich die beiden Seitenteile 2, 3 zumindest nicht entlang der gesamten Kontaktfläche 6.

Im gezeigten Beispiel weisen sowohl das erste als auch das zweite Seitenteil mehrere zum Durchleiten eines Fluids geeignete und vorgesehene erste Kanäle 4 auf. Diese ersten Kanäle erstrecken sich von einer den Hohlraum definierenden inneren Oberfläche zu einer gegenüberliegenden außenseitigen Oberfläche A₂, A₃. Jeder der ersten Kanäle 4 mündet in einen der mehreren zweiten Kanäle 5, welche somit mit mindestens einem ersten Kanal 4 in Fuidverbindung stehen. Die zweiten Kanäle 5 erstrecken sich zumindest abschnittweise entlang der außenseitigen Oberfläche A₂, A₃ des ersten und/oder zweiten Seitenteils.

In dem geschlossenen Zustand der Blasform 1, in dem eine Umformung eines (in dieser Figur nicht gezeigten) Kunststoffvorformlings zu einem Kunststoffbehältnis innerhalb der Blasform möglich ist, ist jeder erste Kanal 4 (gegebenenfalls über einen oder mehrere zweite Kanäle 5) als auch jeder zweite Kanal zumindest einseitig in Fluidverbindung mit einem Reinraum 100. Diese Fluidverbindung besteht auch dann, wenn das erste und das zweite Seitenteil in einem (nicht gezeigten) Blasformträger angeordnet ist. Ein solcher Blasformträger kontaktiert eine außenseitigen Oberfläche A₂, A₃ des ersten und/oder zweiten Seitenteils 2, 3 und begrenzt vorzugsweise auch einen oder mehrere zweite Kanäle 5 zumindest abschnittsweise in deren radialer Erstreckung. Der Blasformträger bildet somit vorzugsweise eine radial außenseitige Wandung des zweiten Kanals 5, welcher im gezeigten Beispiel als Vertiefung, Nut oder Furche in der außenseitigen Oberfläche A₂, A₃ des ersten und/oder zweiten Seitenteils 2, 3 ausgeführt ist.

Die Verbindung des zweiten Kanals 5 mit dem Reinraum 100 kann dadurch gewährleistet sein, dass eine entsprechende Aussparung oder Bohrung in dem Blasformträger eine Fluidverbindung zum Reinraum bereitstellt.

Die in Fig. 1 gezeigte Blasform ist mit Adapterelementen 10, 11 und 12 ausgestattet. Durch derartige Adapterelemente 10 - 12 ist es möglich, eine Blasform 1 optional so auszurüsten, dass sie nicht nur von einem Benutzer (gegebenenfalls unter Werkzeugeinsatz) in einem Blasformträger eingesetzt werden kann, sondern dass die Fixierung der Blasform 1 in einem Blasformträger über mindestens eines der Adapterelemente 10 - 12 erfolgt, welches vorzugsweise werkzeuglos in einer entsprechenden Aufnahme des Blasformträgers fixierbar ist. Die Fixierung des Adapterelements in dem Blasformträger kann beispielsweise über das Adapterelement 12 erfolgen, welches pneumatisch ausgelöst in einer entsprechenden Aufnahme des Blasformträgers gehalten wird. Die Adapterelemente können daher auch als Befestigungsmittel zum Befestigen der Blasform in einem Blasformträger dienen.

Die in Fig. 1 gezeigten Adapterelemente 10 und 11 sind als separate Adapterelemente 10, 11 ausgebildet, so dass sie zusammen mit den Seitenteilen 2, 3 relativ zueinander bewegt werden können, beispielsweise um die Blasform zu öffnen. Weiterhin sind in Fig 1 Aufnahmebereiche 13, 14 gezeigt, in welchen ein weiteres Adapterelementpaar 13, 14 (in Fig. 1 nicht gezeigt) eingesetzt werden kann.

Das Adapterelementpaar 10 und 11 weist im gezeigten Beispiel Kontaktelemente 20 auf, die von einer Greifeinrichtung eines Roboters erfasst werden können. Diese Kontaktelemente 20 sind im gezeigten Beispiel jeweils an den Adapterelementen 10 oder 11 angeordnet und können somit bei Bedarf mit der Blasform 1 verbunden werden. Die Kontaktelemente 20 ermöglichen es, dass eine (nicht gezeigte) Greifeinrichtung eines Garniturwechselroboters die Seitenteile 2, 3 aufnehmen und aus dem Blasformträger entfernen oder in diesen einsetzen kann. Die Geometrie der Kontaktelemente 20 kann für eine bestimmte Blasformgeometrie charakteristisch sein, so dass beispielsweise von einer zu den Kontaktelementen 20 komplementär ausgebildete Greifeinrichtung eines Roboters nur diejenigen Blasformen 1 gegriffen und aufgenommen werden können, die einer vorgegebenen Geometrie entsprechen.

Weiterhin ist in Fig. 1 ein Dichtelement 30 dargestellt welches ein Befestigungsmittel 18 zum Befestigen der Blasform in einem Blasformträger, hier mittels des Adapterelements 12, gegenüber dem Reinraum zumindest abschnittsweise abdichten kann. Somit kann erreicht werden, dass das Befestigungsmittel 12 selbst nicht im Reinraum angeordnet ist und somit auch nicht die besonderen Anforderungen hinsichtlich der Beständigkeit gegenüber wiederholter Sterilisationsmittelbeaufschlagung und/oder Temperaturbeaufschlagung erfüllen muss.

Das Bezugszeichen 40 kennzeichnet einen Bodenträger, der die Blasform 1 im geschlossenen Zustand im Bereich des zu formenden Behältnisbodens abschließt.

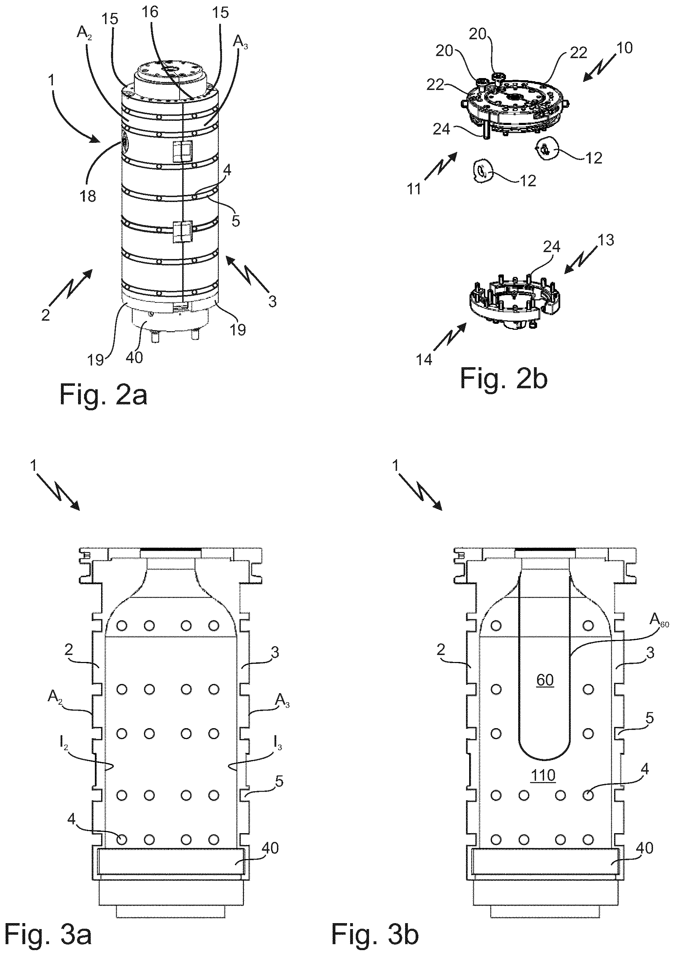

Fig. 2a zeigt eine weitere schematische Darstellung einer Blasform 1 in einem geschlossenen Zustand. Wie auch in Fig. 1 sind die ersten 4 und zweiten Kanäle 5 beider Seitenteile 2, 3 erkennbar. Die Kanäle 5 erstrecken sich auf den äußeren Oberflächen A₂, A₃ dieser beiden Seitenteile 2, 3 wobei die Kanäle 5 auf der radial äußeren Seite offen sind, so dass die als Bohrungen in den radial innenliegenden Wandungen der zweiten Kanäle 5 ausgebildeten ersten Kanäle 4 erkennbar sind.

In der Darstellung gemäß Fig. 2a ist die Blasform 1 ohne Adapterelemente 10 - 14 dargestellt. In den Befestigungsbereichen 15, 19, in denen die Adapterelementpaare 10 und 11 beziehungsweise 13 und 14 anordenbar sind, sind die Aufnahmen 16 (vorzugsweise Schraubgewinde) erkennbar, die Befestigungsmittel zum Befestigen der Adapterelemente 10, 11, 13, 14 wie beispielsweise Schrauben aufnehmen können. Auch in dieser Ausgestaltung kann die Blasform 1 in einem (nicht gezeigten) Blasformträger fixiert werden. Dazu muss üblicherweise das Befestigungselement 18 mittels eines geeigneten Werkzeugs durch einen Benutzer in der Blasform fixiert werden.

An dem Befestigungselement 18 können beispielsweise Kupplungen angeordnet werden, welche beispielsweise ein automatisches Lösen von Teilen der Blasform 1 und insbesondere der Blasform 1 vom Blasformträger ermöglichen.

Das Bezugszeichen 40 kennzeichnet auch in Fig. 2a einen Bodenträger, der die Blasform im geschlossenen Zustand im Bereich des zu formenden Behältnisbodens abdichtet.

Fig. 2b zeigt eine schematische Darstellung von Adapterelementen 10 - 14 zum Ansetzen an eine Blasform 1, wie sie in Fig. 2a dargestellt ist. Die Adapterelemente 10 und 13 sind dabei jeweils für die Befestigung an dem Seitenteil 3 eingerichtet und vorgesehen, wohingegen die Adapterelemente 11 und 14 für die Befestigung an dem Seitenteil 2 eingerichtet und vorgesehen sind. Diese Adapterelemente 10 und 11 sowie 13 und 14 sind dabei bevorzugt jeweils im wesentlichen halbkreisförmig ausgebildet so dass die Adapterelementpaare 10 und 11 sowie 13 und 14, wenn sie an die Blasform angesetzt sind, im geschlossenen Zustand jeweils einen Abschnitt der Blasform kreisförmig umschließen.

Zur Befestigung der Adapterelemente 10, 11, 13 und 14 an den jeweiligen Seitenteilen 2, 3 beziehungsweise in den Befestigungsbereichen 15, 19 sind Bohrungen 22 vorgesehen, welche mit den Bohrungen 16 in den zugehörigen Blasformteilen 2, 3 in Überdeckung bringbar sind, und beispielsweise zum Anbringen einer Schraubbefestigung dienen können. Um die Ausrichtung der Bohrungen 22 und 16 zu vereinfachen sind Zentrierstifte 24 vorgesehen, die in entsprechende Ausnehmungen 16 im ersten und/oder zweiten Seitenteil 2, 3 beziehungsweise in deren Befestigungsbereichen 15, 19 eingreifen können.

Das Bezugszeichen 12 kennzeichnet ein weiteres Adapterelement, welches insbesondere an dem Befestigungsabschnitt 18, der sich an dem Außenumfang der Blasform 1 beziehungsweise der beiden Seitenteile 2, 3 befindet, angeordnet wird. Mittels dieses Adapterelements 12 können insbesondere Befestigungsmechanismen automatisch (vorzugsweise pneumatisch) geschlossen und/oder gelöst werden.

Fig. 3a zeigt eine Schnittdarstellung einer Blasform 1 im geschlossenen Zustand. Diese weist zwei Seitenteile 3 und 3 sowie ein Bodenteil 40 auf. Dieses Bodenteil 40 wird dabei von den beiden Seitenteilen gehalten, was insbesondere durch einen Formschluss erfolgen kann. Dabei sind in den Seitenteilen 2,3 jeweils Fixiermittel zum Halten des Bodenteils 2 integriert.

Erkennbar ist sind in Fig. 3a auch die als Bohrungen ausgebildeten ersten Kanäle 4, die auf den Innenseiten I₂ und I₃ der beiden Seitenteile 2, 3 münden. Auf den Außenseiten A₂ und A₃ beider Seitenteile 2, 3 sind auch die Vertiefungen zu erkennen, die die zweiten Kanäle bilden.

In Fig. 3b ist zusätzlich auch ein Vorformling 60 dargestellt, durch welchen das Volumen 110 definiert wird welches zwischen dessen Außenseite A₆₀ und den Innenseiten I₂ und I₃ der beiden Seitenteile 2, 3 angeordnet ist. Bei der Expansion des Vorformlings 60 zu einem Behältnis der in radialer Richtung bis an die Innenseiten I₂ und I₃ der beiden Seitenteile 2, 3 heran reicht, muss das gesamte Fluid, das zuvor in diesem Volumen 110 angeordnet war abgeleitet werden. Dies kann durch die Vielzahl der ersten und zweiten Kanäle 4, 5 besonders widerstandsarm und homogen erfolgen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Blasform
- 2: erstes Seitenteil
- 3: zweites Seitenteil
- 4: erster Kanal
- 5: zweiter Kanal
- 6: Kontaktstelle, Kontaktfläche
- 10, 11, 12, 13, 14,: Adapterelemente
- 15: Befestigungsbereich
- 16: Aufnahme, Schraubgewinde, Bohrung
- 18: Befestigungsabschnitt Befestigungsmittel, Befestigungselement
- 19: Befestigungsbereich, Befestigungsabschnitt
- 20: Kontaktelement, Vorsprung
- 22: Bohrung
- 24: Zentrierstift
- 30: Dichtelement
- 40: Bodenträger
- 60: Vorformling
- 100: Reinraum
- 110: (zu verdrängendes) (Fluid-) Volumen
- I₂, I₃: (radial) innenseitige Oberfläche der Seitenteile,
- A₂, A₃: (radial) außenseitige Oberfläche der Seitenteile,
- A₆₀: (radial) außenseitige Oberfläche des Vorformlings

## Patentansprüche

1. Blasform (1) zum Umformen von Kunststoffvorformlingen (60) zu Kunststoffbehältnissen mit einem ersten Seitenteil (2) und einem zweiten Seitenteil (3), welche bezüglich einander relativbeweglich sind und in einem zusammengesetzten Zustand einen Hohlraum (110) zumindest abschnittsweise umschließen, innerhalb dessen ein Kunststoffvorformling (60) zu einem Kunststoffbehältnis expandierbar ist,
**dadurch gekennzeichnet, dass**
das erste und/oder zweite Seitenteil (2, 3) mindestens einen zum Durchleiten eines Fluids geeigneten und vorgesehenen ersten Kanal (4), welcher sich von einer den Hohlraum (110) definierenden inneren Oberfläche (I₂, I₃) zu einer gegenüberliegenden außenseitigen Oberfläche (A₂, A₃) erstreckt, und einen zweiten Kanal (5) aufweist, welcher mit dem ersten Kanal (4) in Fluidverbindung steht und sich zumindest abschnittweise entlang der außenseitigen Oberfläche (A₂, A₃) des ersten und/oder zweiten Seitenteils (2, 3) erstreckt, wobei der erste Kanal (4) und/oder der zweite Kanal (5) in einem Zustand der Blasform, in dem eine Umformung eines Kunststoffvorformlings (60) zu einem Kunststoffbehältnis innerhalb der Blasform (1) möglich ist, zumindest einseitig in Fluidverbindung mit einem Reinraum (100) ist.

2. Blasform (1) nach Anspruch 1,
**dadurch gekennzeichnet, dass**
der erste Kanal (4) eine Durchdringung, vorzugsweise eine Bohrung durch eine den Hohlraum (110) zumindest abschnittsweise umschließen Wandung des ersten und/oder zweiten Seitenteils (2, 3) ist.

3. Blasform (1) nach einem der vorangehenden Ansprüche,
**dadurch gekennzeichnet, dass**
der zweite Kanal (5) ein offener Kanal ist, welcher vorzugsweise als eine Vertiefung in einer außenseitigen Oberfläche (A₂, A₃) des ersten und/oder zweiten Seitenteils (2, 3) ausgebildet ist.

4. Blasform (1) nach einem der vorangehenden Ansprüche,
**dadurch gekennzeichnet, dass**
das erste und/oder zweite Seitenteil (2, 3) mehrere erste Kanäle (4) und/oder zweite Kanäle (5) aufweist, wobei bevorzugt mehrere erste Kanäle (4) in Fluidverbindung mit einem zweiten Kanal (5) sind.

5. Blasform (1) nach einem der vorangehenden Ansprüche,
**dadurch gekennzeichnet, dass**
wenigstens der erste oder zweite Seitenteil (2, 3), bevorzugt der erste und zweite Seitenteil (2, 3) jeweils, einen Befestigungsabschnitt (15, 18, 19) aufweist, an dem ein Adapterelement (10, 11, 12, 13, 14) lösbar anbringbar ist, wobei das Adapterelement (10, 11, 12, 13, 14) ein vollautomatisches und/oder halbautomatisches Wechseln mindestens eines Seitenteils (2, 3) ermöglicht, wobei das Adapterelement (10, 11, 12, 13, 14) pneumatisch gegenüber einem Blasformträger festlegbar und/oder lösbar ist, und/oder das Adapterelement (10, 11, 12, 13, 14) zum Lösen und/oder Festlegen des Seitenteils (2, 3) gegenüber einem Blasformträger von einer Robotereinrichtung greifbar ist.

6. Blasform (1) nach einem der vorangehenden Ansprüche,
**dadurch gekennzeichnet, dass**
das erste und/oder zweite Seitenteil (2, 3) mindestens ein Befestigungsmittel (18) zur Verbindung des Seitenteils (2, 3) mit einem Blasformträger aufweist, wobei dieses Adapterelement (12) vorzugsweise mittels eines Dichtelements (30) gegenüber mindestens einem der ersten und/oder zweiten Kanäle (4, 5), vorzugsweise gegenüber allen ersten und/oder zweiten Kanälen (4, 5) abgedichtet ist.

7. Blasform (1) nach Anspruch 6,
**dadurch gekennzeichnet, dass**
das Adapterelement (12) für einen automatisierten Blasformwechsel, vorzugsweise einen von einem Blasformwechselroboter durchführbaren Blasformwechsel, gegenüber dem Blasformträger lösbar und/oder arretierbar ist, und/oder das erste und/oder zweite Seitenteil (2, 3) mindestens ein maschinenlesbares Datenspeicherelement aufweist, welches vorzugsweise ausgewählt ist aus einer Gruppe, die einen nichtflüchtigen Speicher, eine RFID-Markierung, einen optischen 2D-Code, vorzugsweise einen QR-Code, DataMatrix-Code Han-Xin-Code, JAB-Code, Maxi-Code, DotCode oder Aztec-Code, optischen eindimensionalen Code, vorzugsweise einen Barcode, EAN-X, UPC-X oder 2/5 Interleaved, und einen dreidimensionalen Code, vorzugsweise Vorsprünge (20) und/oder Vertiefungen in einem Identifikationsbereich des ersten und/oder zweiten Seitenteils (2, 3) umfasst.

8. Blasform (1) nach einem der vorangehenden Ansprüche,
**dadurch gekennzeichnet, dass**
die Blasform (1) unmittelbar an dem Blasformträger befestigbar ist und insbesondere zwischen der Blasform und dem Blasformträger kein Druckkissen befindlich ist.

9. Blasform (1) nach einem der vorangehenden Ansprüche,
**dadurch gekennzeichnet, dass**
das erste und/oder zweite Seitenteil (2, 3) mehrere erste Kanäle (4) und/oder zweite Kanäle (5) aufweist, wobei jeder dieser Kanäle (4, 5) von dem nächstliegenden Kanal (4, 5) höchstens 100 mm, bevorzugt ≤ 90 mm, weiter bevorzugt ≤ 80 mm und insbesondere bevorzugt ≤ 75 mm beabstandet ist.

10. Verfahren zum Umformen von Kunststoffvorformlingen (60) zu Kunststoffbehältnissen innerhalb eines Reinraums (100)
**gekennzeichnet durch** die Schritte:
Einführen eines Vorformlings (60) in eine Blasform (1) mit einem ersten Seitenteil (2) und einem zweiten Seitenteil (3), welche bezüglich einander relativbeweglich sind,
aufeinander Zuführen des ersten Seitenteils (2) und des zweiten Seitenteils (3) bis zu einem zusammengesetzten Zustand in welchem ein Hohlraum (110) den Kunststoffvorformling (60) umschließt,
Einleiten eines Mediums in ein inneres Volumen des Kunststoffvorformlings (60) und expandieren des Kunststoffvorformlings (60) zu einem Kunststoffbehältnis, wobei ein im Hohlraum (110) zwischen einer Außenwandung (A₆₀) des Kunststoffvorformlings (60) und einer Innenwandung (I₂, I₃) des ersten und/oder zweiten Seitenteils (2, 3) angeordnetes Fluid durch einen ersten Kanal (4), welcher sich von einer den Hohlraum (110) definierenden inneren Oberfläche (I₂, I₃) des ersten und/oder zweiten Seitenteils (2, 3) zu einer gegenüberliegenden außenseitigen Oberfläche (A₂, A₃) des ersten und/oder zweiten Seitenteils (2, 3) erstreckt, ausströmt und über einen zweiten Kanal (5), welcher mit dem ersten Kanal (4) in Fluidverbindung steht und sich zumindest abschnittweise entlang der außenseitigen Oberfläche (A₂, A₃) des ersten und/oder zweiten Seitenteils (2, 3) erstreckt, in den Reinraum (100) abgeleitet wird.
